# EUROPEAN PATENT APPLICATION

(11) **EP 4 559 555 A1**
(43) Date of publication of application: **28.05.2025**
(21) Application number: 24214416.0
(22) Date of filing: 21.11.2024
(51) Int. Cl.: B01D 41/04

(54) **DEVICE FOR CLEANING TUBULAR FILTER CARTRIDGES AND METHOD FOR CLEANING TUBULAR FILTER CARTRIDGES**

(30) Priority: 22.11.2023 IT 202300024747
(71) Applicant: Colussi Ermes SRL, 33072 Casarsa Della Delizia (PN) (IT)
(72) Inventor: Colussi, Giovanni Battista, 33072 Casarsa della Delizia (PN) (IT)
(74) Representative: Frare, Paolo

(57) **Abstract**

The present finding relates to a device (1) for cleaning tubular filter cartridges (2), which comprises means for selectively introducing water (22) and means for selectively introducing air (5), controlled by the electronic control means (50) of the device (1), to respectively introduce water and air, at a pressure higher than atmospheric pressure, in the through-duct (8) obtained longitudinally to a tubular filter cartridge (2), so as to remove any solid particles trapped in such tubular filter cartridge (2) The finding also relates to a method for cleaning tubular filter cartridges (2) carried out using such a device (1).

## Description

The present invention refers to a device for cleaning tubular filter cartridges and to a method for cleaning tubular filter cartridges.

Nowadays, in various sectors, such as for example the sector of water treatment, fine chemistry, petrochemicals, desalination, oil & gas, food industry (production and processing of food and beverages), energy, resins and paints, pharmaceuticals, microelectronics, galvanic technology, hydraulics, steel manufacturing, etc., in order to filter desired liquids (e.g., food-grade liquids, pharmaceuticals, etc.), tubular filter cartridges (hereinafter also referred to simply as tubular cartridges) are known to be used, typically consisting of tubular elements, generally cylindrical, whose side wall is made of a material (generally felt or other non-woven fabric) capable of being passed through by a specific liquid while retaining any solid particles present therein.

Depending on the specific application, such tubular filter cartridges have different dimensions and are made of different materials.

Depending on the specific application, the filtration can take place by inserting a liquid into the internal duct of the tubular cartridge through one of its two bases, and then allowing it to exit through the side wall of the tubular cartridge (so that it retains any solid particles present in the liquid), or by introducing a liquid in the internal duct of the tubular cartridge, passing it through its side wall, and then allowing such liquid, deprived of any solid particles present therein due to its passage through the side wall of the tubular cartridge, to exit from one of the bases of the cartridge.

In general, after a certain period of use, such known-type tubular cartridges become saturated with solid particles and are no longer capable of allowing the liquid to pass through; in these cases, therefore, it is necessary to replace such tubular cartridges with new tubular cartridges (which is, however, quite expensive both in terms of costs and environmental impact), or to clean the tubular cartridges in order to remove as many solid particles as possible therefrom.

Cleaning such tubular cartridges is performed manually, typically by washing the external surface of the tubular cartridge and the internal surface of the internal duct thereof with a jet of water or air, usually at high pressure (e.g., using a pressure washer or a similar device) and/or by making the side surface of the tubular filter cartridge passed through by a jet of water or air, generally at high pressure (e.g., using a pressure washer or a similar device), in the opposite direction to that in which such side surface is passed through during filtering, so as to remove therefrom the solid particles deposited thereon.

However, such known solution for cleaning tubular filter cartridges has the drawback of being rather laborious and requiring a significant amount of time to execute.

Furthermore, such known solution for cleaning tubular filter cartridges requires a very high consumption of water and/or air, leading to costs, both in economic terms and environmental impact terms, resulting therefrom.

Again, such solution for cleaning tubular filter cartridges, being performed manually, generally by the use of a pressure washer or other similar tool, does not ensure a thorough and uniform cleaning of such tubular filter cartridges.

The main task of the present finding is to obtain a device for cleaning tubular filter cartridges and a method for cleaning tubular filter cartridges which allows to solve the problems of the stated prior art, and in particular, to enable an accurate cleaning of a tubular filter cartridge in a relatively easy and fast manner.

In the scope of such task, an object of the present finding is to obtain a device for cleaning tubular filter cartridges and a method for cleaning tubular filter cartridges that ensures an effective cleaning of a tubular filter cartridge while reducing water consumption compared to a manual cleaning intervention carried out by a pressure washer or similar device for spraying water at high pressure.

Another object of the finding is to obtain a device for cleaning tubular filter cartridges and a method for cleaning tubular filter cartridges that ensures an accurate and deep cleaning of a tubular filter cartridge.

The task and objects according to the present finding are achieved by a device for cleaning tubular filter cartridges, comprising a first base and a second base, connected to each other by a filtering side wall, on which, respectively, a first opening and a second opening are obtained, connected to each other by a through-duct obtained longitudinally to the respective tubular filter cartridge, wherein the device comprises:
- at least one first closing element, on which the first base of a tubular filter cartridge can be positioned, so as to close the first opening thereof;
- a second closing element which can be positioned on the second base of a tubular filter cartridge when the same is positioned with the respective first base on the first closing element, so as to close the second opening thereof;
- means for selectively introducing water connected to the second closing element or the first closing element in such a way as to be able to introduce water, at a pressure higher than atmospheric pressure, through the one between the second closing element and the first closing element to which the means for selectively introducing water are connected, respectively in the second opening or in the first opening, and from this in the through-duct of a tubular filter cartridge whose first base is positioned on the first closing element and whose second base is positioned on the second closing element;
- means for selectively introducing air connected to the second closing element or the first closing element in such a way as to be able to introduce air, at a pressure higher than atmospheric pressure, through the one between the first closing element and the second closing element to which the means for selectively introducing air are connected, respectively in the second opening or in the first opening, and from this in the through-duct of a tubular filter cartridge whose first base is positioned on the first closing element and on which second base the second closing element is positioned;
- electronic control means configured to control the means for selectively introducing water and the means for selectively introducing air, so as to be able to selectively introduce, for a desired time, water and/or air at a pressure higher than atmospheric pressure in the through-duct of a tubular filter cartridge, whose first base is positioned on the first closing element and on which second base the second closing element is positioned.

The task and objects of the finding are also solved by a method for cleaning tubular filter cartridges, each comprising a first base and a second base, connected to each other by a filtering side wall, on which, respectively, a first opening and a second opening are obtained, connected to each other by a through-duct obtained longitudinally to the respective tubular filter cartridge, the method comprising the following phases:
a) positioning a tubular filter cartridge with its first base on the first closing element of a device according to the finding, so as to close the first opening thereof;
b) positioning the second closing element of the device on the second base of the tubular filter cartridge, so as to close the second opening thereof;
c) repeating the following steps one or more times:
d) operating for a desired time the means for selectively introducing water of the device, to introduce water at a pressure higher than atmospheric pressure through the one between the second closing element and the first closing element to which the means for selectively introducing water are connected, respectively in the second opening or in the first opening of the tubular filter cartridge, until such water enters the through-duct of the tubular filter cartridge and exits from it through the filtering side wall of such tubular filter cartridge;
e) interrupting the operation of the means for selectively introducing water;
f) during said phase of operating for a desired time the means for selectively introducing water or after a desired time from the phase of interrupting the operation of the means for selectively introducing water, operating for a desired time, the means for selectively introducing air of the device, to introduce air at a pressure higher than atmospheric pressure through the one between the second closing element and the first closing element to which the means for selectively introducing air are connected, respectively in the second opening or in the first opening of the tubular filter cartridge, until the air enters the through-duct of the tubular filter cartridge and comes out from it through the filtering side wall of the tubular filter cartridge;
g) interrupting the operation of the means for selectively introducing air.

Further advantageous features of the finding are reported in the dependent claims.

The features and advantages of the present finding will be more apparent from the following exemplary and non-limiting description, referred to the attached schematic drawings, in which:
- Figure 1 is a perspective view of a device for cleaning tubular filter cartridges according to the finding;

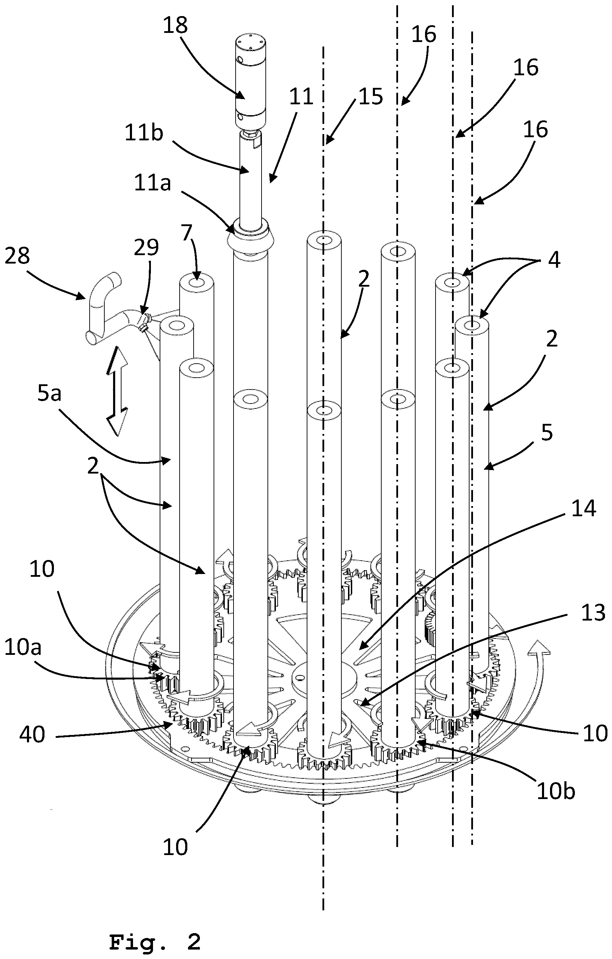

- Figure 2 is a perspective view of some components and of the device of Figure 1 and of some tubular filter cartridges associated therewith;

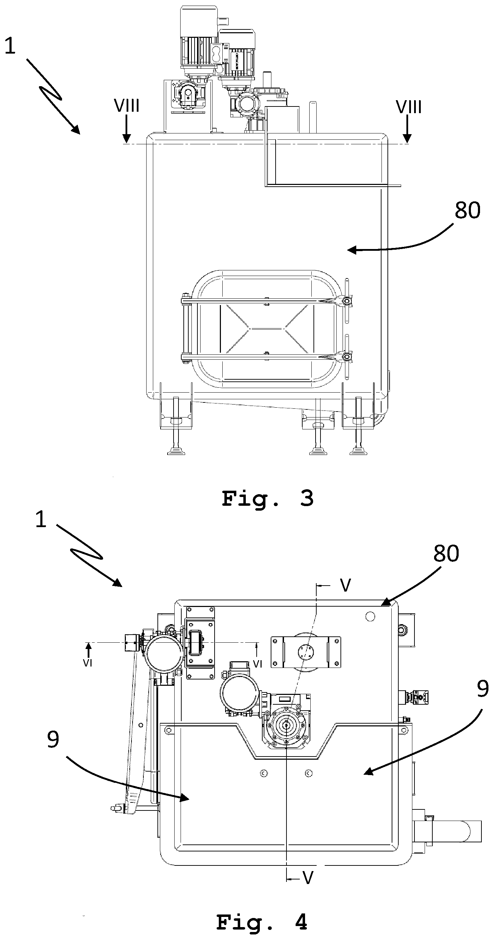

- Figure 3 is a side view of the device of Figure 1;
- Figure 4 is a plan view of the device of Figure 1;

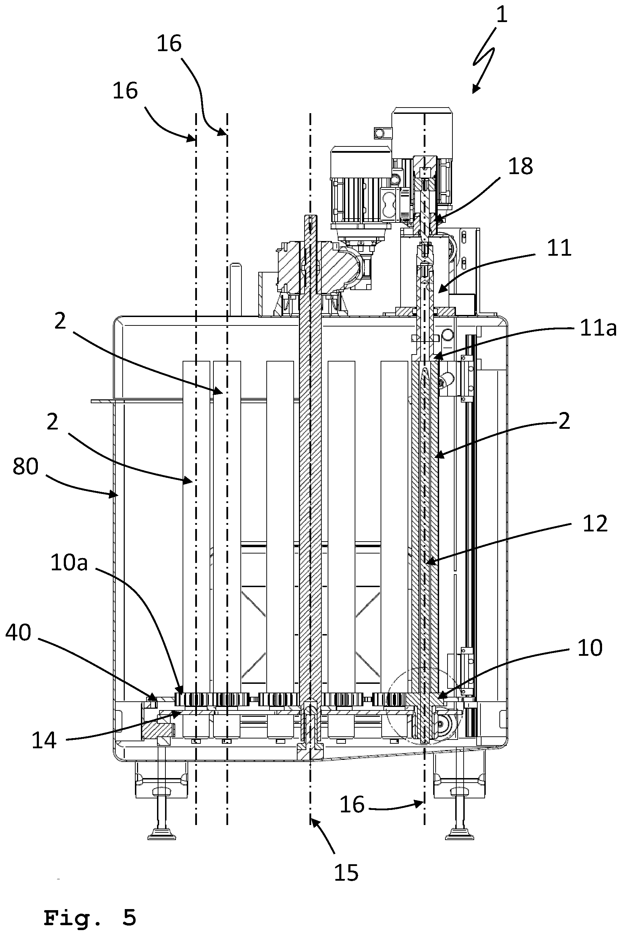

- Figure 5 is a section operated according to the section plane V-V of Figure 4;

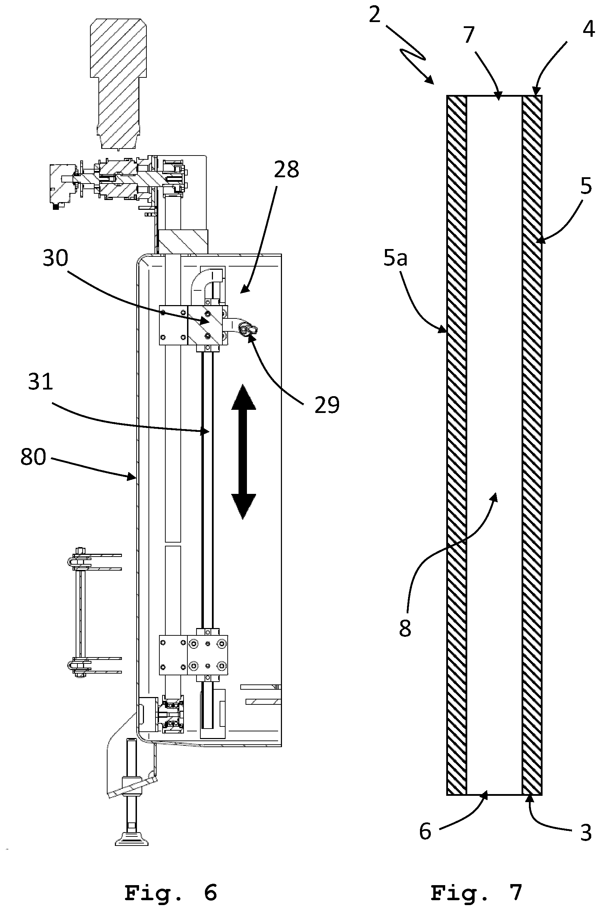

- Figure 6 is a section operated according to the section plane VI-VI of Figure 4;
- Figure 7 is a sectional view of a tubular filter cartridge that can be treated by a device and a method according to the finding;

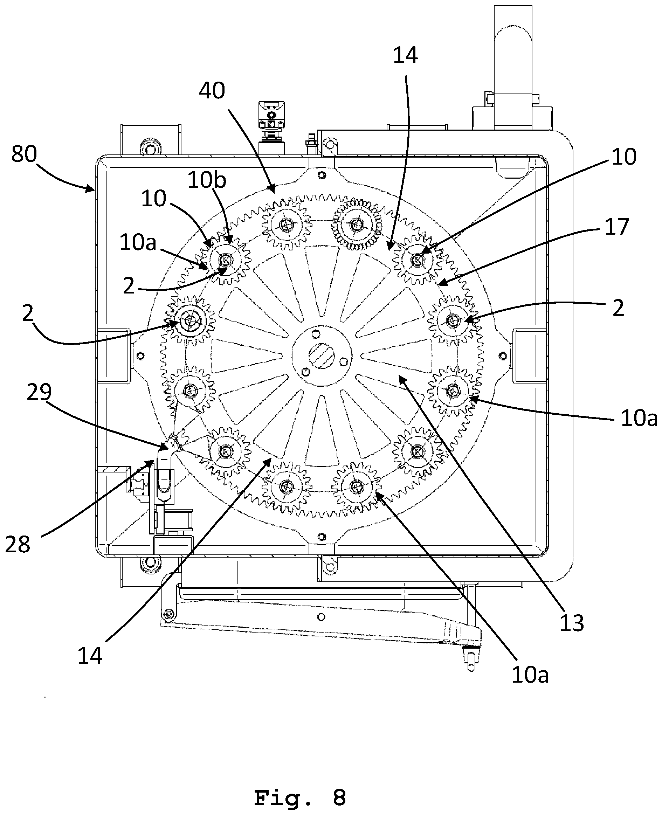

- Figure 8 is a section operated according to the section plane VIII-VIII of Figure 3;

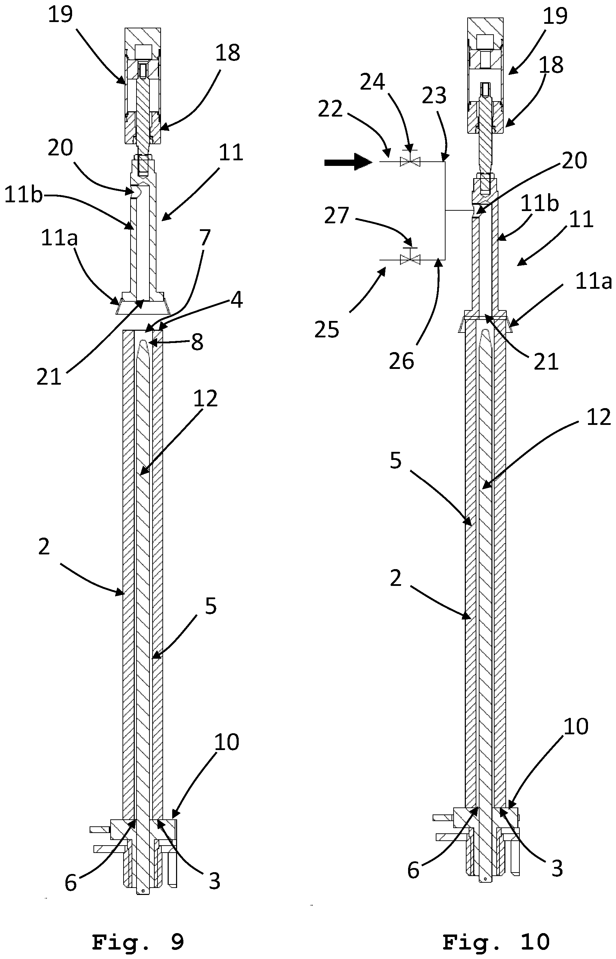

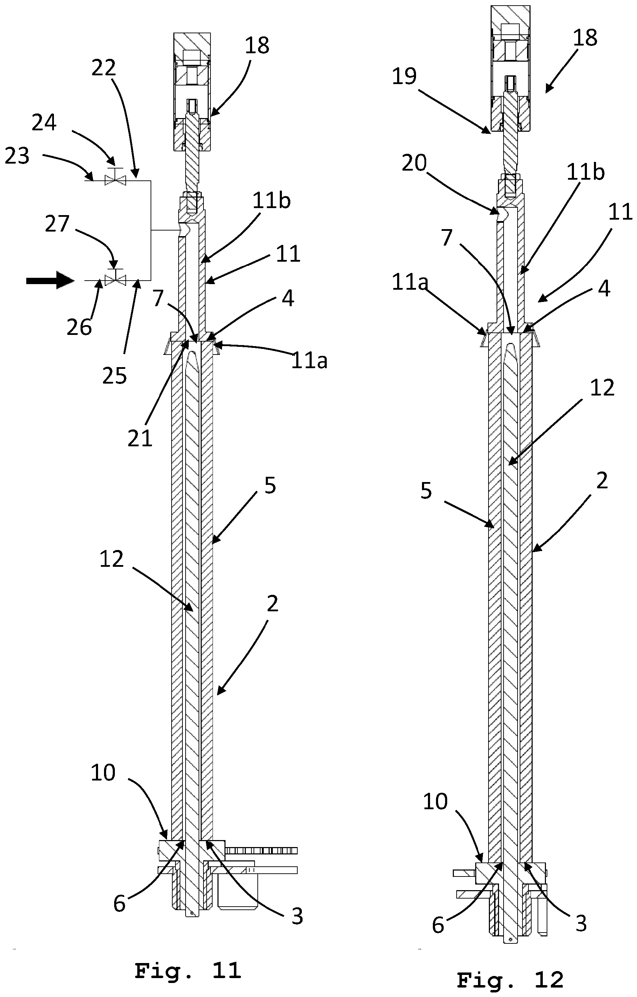

- Figures 9 to 12 are sectional views of a tubular filter cartridge and of some components of the device of Figure 1, partially schematized, in various phases of the process of cleaning the tubular filter cartridge.

With reference to the attached figures, a device for cleaning tubular filter cartridges 2 is indicated overall by reference number 1.

It is emphasized that the term "tubular" means an elongated and hollow shape, preferably cylindrical or prismatic, which can have a desired length, longitudinally to which a through-duct of any cross-section is obtained.

Such filter cartridges 2, therefore, comprise a first base 3 and a second base 4 (which, depending on the shape of the tubular filter cartridge 2, can have for example a circular, elliptical, square, polygonal, or irregular plan, etc.), connected to each other by a filtering side wall 5 (which, depending on the shape of the tubular filter cartridge 2, can have for example a cylindrical, prismatic, parallelepipedal, or irregular shape, etc.), on which, respectively, a first opening 6 and a second opening 7 are obtained, connected to each other by a through-duct 8 (which, depending on the shape of the tubular filter cartridge 2, can have for example a circular, elliptical, square, polygonal, or irregular section, etc.), obtained longitudinally to the respective tubular filter cartridge 2.

Such tubular filter cartridges 1, also referred to simply as filter cartridges or tubular cartridges, are typically used in various sectors, such as for example the sector of water treatment, fine chemistry, petrochemicals, desalination, oil & gas, food industry (production and processing of food and beverages), energy, resins and paints, pharmaceuticals, microelectronics, galvanic technology, hydraulics, steel manufacturing, etc., in order to filter desired liquids (e.g., food-grade liquids, pharmaceuticals, etc.).

The filtering side wall 5 is typically made of a material (generally felt or other non-woven fabric) capable of being passed through by a specific liquid while retaining any solid particles present therein.

Advantageously, the device 1 comprises a casing 80, having a box-like shape, preferably approximately parallelepipedal or cubic, advantageously made of stainless steel, open at the top so that one or more tubular filter cartridges 2 can be inserted thereinto, and closable, advantageously hermetically, through one or more doors 9.

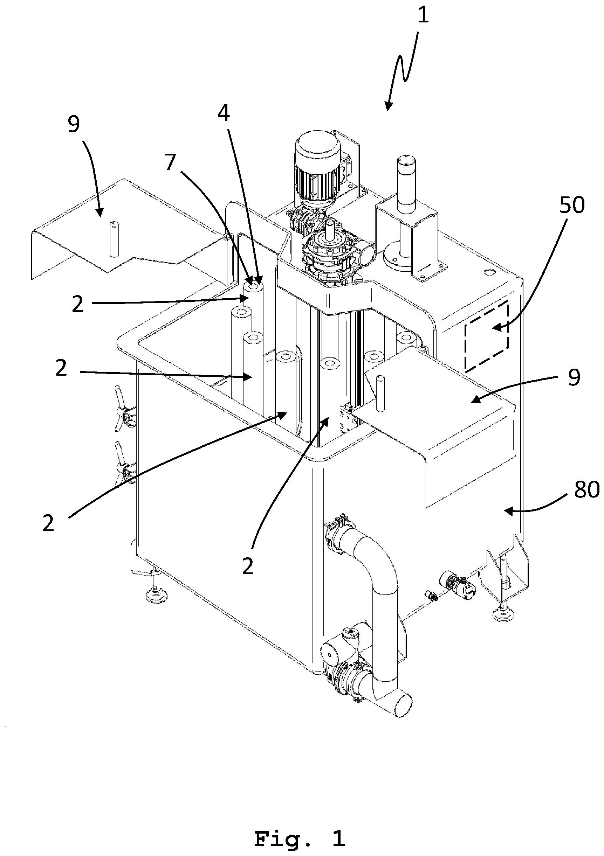

Advantageously, the device 1 comprises electronic control means 50, schematically illustrated in Figure 1 as a dashed rectangle, such as for example a microcontroller, an electronic board, etc., configured to control the electrical, electronic, and electromechanical functions of the device 1.

The device 1 comprises at least one first closing element 10 on which the first base 3 of a tubular filter cartridge 2 can be positioned, so as to close the first opening 6 thereof; the closure of such first opening 6, operated by means of the first closing element 10, can be or not be a hermetic closure.

The device 1 further comprises a second closing element 11 which can be positioned on the second base 4 of a tubular filter cartridge 2 when the same is positioned with the respective first base 3 on the first closing element 10, so as to close the second opening 7 thereof; the closure of such second opening 7, operated by means of the second closing element 11, can be or not be a hermetic closure.

In an advantageous embodiment, as for example that illustrated in the attached figures, the device 1 comprises two or more first closing elements 10, preferably twelve first closing elements 10; however, such first closing elements 10 can be present in a desired number, starting from one.

In an advantageous embodiment, a bar 12 protrudes from the one or more first closing elements 10, suitable for being inserted into the first opening 6 of the first base 3 and, consequently, in the through-duct 8 of a tubular filter cartridge 2 when this is positioned with its first base 3 on the first closing element 10 equipped with such bar 12; such bar 12 helps keep the tubular filter cartridge 2 constrained to the first closing element 10, and further reduces the free volume inside the through-duct 8, thereby reducing the amount of water and air needed to fill such free volume, as will be better explained below.

Advantageously, the bar 12 can have a cylindrical shape, preferably with a conical tip.

Advantageously, the bar 12 can cover a desired percentage, preferably from 50% to 95%, of the longitudinal extension of a filter cartridge 2 placed with its first base 3 positioned on the first closing element 10 equipped with the bar 12.

In an advantageous embodiment, the device 1 comprises two or more first closing elements 10 and movement means 13 of such two or more first closing elements 10, configured to selectively bring a desired one of such two or more first closing elements 10 in correspondence with the second closing element 11, so as to position such second closing element 11 and such desired first closing element 10 on the second base 4 and first base 3, respectively, of the same tubular filter cartridge 2.

Advantageously, the movement means 13 are controlled by the electronic control means 50 of the device 1.

In an advantageous embodiment, such as for example that illustrated in the attached figures, the movement means 13 comprise a rotating support 14, shaped, for example, as a wheel and preferably flat, which can be rotated around a vertical axis of rotation 15 (advantageously fixed with respect to the casing 80 of the device 1) and on which the one or more first closing elements 10 are mounted so that, if the first bases 3 of as many tubular filter cartridges 2 are positioned on the same, the latter are arranged with their longitudinal axis 16 parallel to the vertical axis of rotation 15 of the rotating support 14.

Advantageously, the rotating support 14 can be rotated by an appropriate electric operation, advantageously controlled by the electronic control means 50.

Advantageously, the device 1 comprises rotation means suitable for rotating around its longitudinal axis 16 a tubular filter cartridge 2, positioned with its first base 3 on the first closing element 10. Advantageously, such rotation means are controlled by the electronic control means 50.

In an advantageous embodiment, such as for example that illustrated in the attached figures, in which the device 1 comprises the movement means 13, the first closing elements 10 can comprise as many toothed wheels 10a, on a first flat face 10b of which the first base 3 of a tubular filter cartridge 2 can be positioned.

Advantageously, the toothed wheels 10a are hinged to the rotating support 14 and are arranged, preferably equidistant from each other, along a circumference 17 defined on the rotating support 14 and centered in the vertical axis of rotation 15.

In this advantageous embodiment, the rotation means suitable for rotating around its longitudinal axis 16 a tubular filter cartridge 2, arranged with its first base 3 positioned on the first closing element 10, comprise the toothed wheels 10a and a ring 40, fixed with respect to the vertical axis of rotation 15 (and therefore, in the advantageous embodiment illustrated in the attached figures, fixed with respect to the casing 80 of the device 1), internally toothed so as to mesh with the toothed wheels 10a and cause their rotation around the respective hinging axis during the rotation of the rotating support 14 around the vertical axis of rotation 15.

Advantageously, the device 1 comprises selective positioning means 18 of the second closing element 11, suitable for selectively positioning such second closing element 11 on the second base 4 of a tubular filter cartridge 2 and removing such second closing element 11 from such second base 4.

In an advantageous embodiment, such selective positioning means 18 comprise a hydraulic piston drive 19, operatively connected to the second closing element 11, so as to be able to move it longitudinally to a tubular filter cartridge 2 positioned on a first closing element 3, with its longitudinal axis 16 aligned with the second closing element 11; by operating the hydraulic piston drive 19, it is thus possible to bring the second closing element 11 closer to and to position it on the second base 4 of the tubular filter cartridge 2, or to move such second closing element 11 away from the second base 4.

Advantageously, the second closing element 11 has a tubular shape, and more preferably comprises a head 11a, suitable for being positioned on the second base 4 of a tubular filter cartridge 2 to close, preferably hermetically, the second opening 7 thereof, from which a cylindrical body 11b protrudes, preferably connected to the hydraulic piston drive 19.

Advantageously, the second closing element 11 is internally hollow, and communicates with the outside through an inlet opening 20 and an outlet opening 21; advantageously, in the condition where the second closing element 11 is positioned on the second base 4 of a tubular filter cartridge 2 to close the second opening 7 thereof, the outlet opening 21 of such closing element 11 is in fluid communication with such second opening 7.

The device 1 further comprises means for selectively introducing water 22 connected to the second closing element 11 (as in the advantageous embodiment illustrated in the attached figures) or to the first closing element 10 (as in a further advantageous embodiment not illustrated in the attached figures), in such a way as to be able to introduce water, at a desired pressure higher than atmospheric pressure, through the one between the second closing element 11 and the first closing element 10 to which the means for selectively introducing water 22 are connected, respectively in the second opening 7 (if the means for selectively introducing water 22 are connected to the second closing element 11) or in the first opening 6 (if the means for selectively introducing water 22 are connected to the first closing element 10) of a tubular filter cartridge 2, whose first base 3 is positioned on the first closing element 10 and on which second base 4 the second closing element 11 is positioned.

Such means for selectively introducing water 22 comprise, for example, a first tubular duct 23, hydraulically connected at a first end thereof, preferably to the inlet opening 20 of the second closing element 11 (or, in a further advantageous embodiment not illustrated, to a similar inlet opening, not illustrated, obtained in the first closing element 10), and connected, at a second end thereof, to a water source, not illustrated, such as for example the water supply network of a building, advantageously with the interposition of first valve means 24, advantageously controlled by the electronic control means 50 of the device 1.

The device 1 further comprises means for selectively introducing air 25 connected to the second closing element 11 (as in the advantageous embodiment illustrated in the attached figures) or to the first closing element 10 (as in a further advantageous embodiment not illustrated), in such a way as to be able to introduce air, at a pressure higher than atmospheric pressure, through the one between the second closing element 11 and the first closing element 10 to which the means for selectively introducing air 25 are connected, respectively in the second opening 7 (if the means for selectively introducing air 25 are connected to the second closing element 11) or in the first opening 6 (if the means for selectively introducing air 25 are connected to the first closing element 10) of a tubular filter cartridge 2, whose first base 3 is positioned on the first closing element 10 and on which second base 4 the second closing element 11 is positioned.

Advantageously, the means for selectively introducing air 25 comprise a second tubular duct 26, in fluid communication with a first end thereof, preferably with the interior of the second closing element 11 (or, in a further advantageous embodiment not illustrated, with the interior of the first closing element 10) and, with a second end thereof, with a pressurized air source, not illustrated, such as for example a compressor or a cylinder filled with compressed air, advantageously with the interposition of second valve means 27, advantageously controlled by the electronic control means 50 of the device 1.

Advantageously, as in the advantageous exemplary embodiment illustrated in the attached figures, the second tubular duct 26 can converge with the first tubular duct 23 of the means for selectively introducing water 22 before introducing in the second closing element 11; in this way, both air and water can be introduced into the second closing element 11 through the inlet opening 20 thereof.

In a further advantageous embodiment, not illustrated, the second tubular duct 26 can converge with the first tubular duct 23 of the means for selectively introducing water 22 before introducing in the first closing element 10.

In other advantageous embodiments, not illustrated, the second tubular duct 26 can be completely distinct from the first tubular duct 23; specifically, the first tubular duct 23 and the second tubular duct 26 can be introduced one in the first closing element 10 and the other in the second closing element 11, or vice versa, or both the first tubular duct 23 and the second tubular duct 26 can enter the first closing element 10 or the second closing element 11, but in different zones thereof.

The electronic control means 50 of the device 1 are configured to control the means for selectively introducing water 22 and the means for selectively introducing air 25 (e.g., by acting on the first valve means 24 and the second valve means 24), so as to be able to selectively introduce, for a desired time, water and/or air at a desired pressure, higher than atmospheric pressure, in the through-duct 8 (respectively through the second opening 7 or the first opening 6, depending on whether the means for selectively introducing water 22 and the means for selectively introducing air 25 are connected to the first closing element 10 or the second closing element 11) of a tubular filter cartridge 2, whose first base 3 is positioned on the first closing element 10 and on which second base 4 the second closing element 11 is positioned.

Advantageously, the device 1 comprises washing means 28 suitable for spraying water on an external face 5a of the filtering side wall 5 of a tubular filter cartridge 2 when this is positioned with its first base 3 on a first closing element 10.

Advantageously, such washing means 28 comprise one or more nozzles 29 capable of being moved longitudinally to a tubular filter cartridge 2 when the same is positioned with its first base 3 on a first closing element 10, so as to be able to spray water on the external face 5a of the filtering side wall 5 of the tubular filter cartridge 2, preferably over the entire length thereof.

Advantageously, such one or more nozzles 29 can be mounted on a carriage 30, which slides on a guide 31 positioned so as to be placed side by side to a tubular filter cartridge 2 when this is positioned with its first base 3 on a first closing element 10, so that the one or more nozzles 29 can be moved laterally and longitudinally to the tubular filter cartridge 2 to spray water on the external face 5a of its filtering side wall 5.

Advantageously, the operation and movement of the washing means 28 are controlled by the electronic control means 50.

The method for cleaning the tubular filter cartridges 2, performed by the device 1 according to the finding, is described below.

One or more tubular filter cartridges 2 can be positioned with their first base 3 on a respective first closing element 10 of a device 1 according to the finding.

If one or more first closing elements 10 are provided with the bar 12, this is inserted into the first opening 6 of the first base 3 and, consequently, into the through-duct 8 of the tubular filter cartridge 2 positioned with its first base 3 on the first closing element 10 equipped with such bar 12; the bar 12 helps keep the tubular filter cartridge 2 constrained to the first closing element 10 and further reduces the free volume inside the through-duct 8, thereby reducing the amount of water and air needed to fill such free volume.

If the device 1 is provided with a single first closing element 10, and this is already positioned aligned with the second closing element 11, the latter is positioned on the second base 4 of the tubular filter cartridge 2 so as to close the second opening 7 thereof.

The positioning the second closing element 11 on the second base 4 can advantageously be done by operating, thanks to the electronic control means 50, the selective positioning means 18, for example the hydraulic piston drive 19, if present.

In an advantageous embodiment, such as for example that illustrated in the attached figures, wherein the device 1 is provided with two or more first closing elements 10 and movement means 13 of such two or more first closing elements 10, configured to selectively bring a desired one of such first closing elements 10 in correspondence with the second closing element 11, the movement means 13 can be activated, thanks to the electronic control means 50, to position a first closing element 10, and the tubular filter cartridge 2 supported thereby, aligned with the second closing element 11; the latter is then positioned on the second base 4 of the tubular filter cartridge 2 so as to close the second opening 7 thereof, by operating the selective positioning means 18, for example the hydraulic piston drive 19, if present, due to the electronic control means 50.

At this point, the method for cleaning tubular filter cartridges 2 provides for operating for a desired time the means for selectively introducing water 22 of the device 1 to introduce water at a pressure higher than ambient pressure, through the one between the second closing element 11 and the first closing element 10 to which the means for selectively introducing water 22 are connected, respectively in the second opening 7 or the first opening 6 of the tubular filter cartridge 2, until such water enters the through-duct 8 of the tubular filter cartridge 2 and exits from it through the filtering side wall 5 of such tubular filter cartridge 2, and thus interrupting the operation of such means for selectively introducing water 22, so as to interrupt the water delivery.

Advantageously, in the case where the means for selectively introducing water 2 are connected to the water system of a building, in which case the water pressure is typically equal to about 3 bars, the means for selectively introducing water 22 are preferably kept active for a period of time ranging from 1 to 5 seconds, preferably for 2 seconds.

The cleaning method further provides, during the phase of operating for a desired time the means for selectively introducing water 22, or after a desired interval of time, preferably between 0 seconds (thus essentially "immediately after") and 5 seconds, from the interruption of the operation of the means for selectively introducing water 22, operating for a desired time the means for selectively introducing air 25 of the device 1, to introduce air at a pressure higher than atmospheric pressure (for example, between 4 and 10 bars, preferably equal to 6 bars), through the one between the second closing element 11 and the first closing element 10 to which the means for selectively introducing air 25 are connected, respectively in the second opening 7 or the first opening 6 of the tubular filter cartridge 2, until such air enters the through-duct 8 of the tubular filter cartridge 2 and exits from it through the filtering side wall 5 of such tubular filter cartridge 2.

The operation of the means for selectively introducing air 25 is then interrupted, so as to interrupt the introduction of air in the through-duct 8.

In the case where air pressure is equal to 6 bars, the means for selectively introducing air 25 are kept operated for a time ranging from 0.5 to 3 seconds, preferably 1 second.

The phases of introducing water and subsequently or simultaneously introducing air into the through-duct 8 are repeated for a desired number of times, for example, three times; it has been observed that repeating the phases of introducing water and air (simultaneously or subsequently to the introduction of water) at a pressure higher than atmospheric pressure in the through-duct 8, and the alternate and repeated exit of such water and air from the filtering side wall 5 of the filter cartridge 2, cause all particles deposited on such filtering side wall 5 during filtration to be near-completely removed.

Specifically, it has been noted that, by repeatedly operating and turning off the means for selectively introducing air 25 during the introduction of water by the means for selectively introducing water 22, pressure pulses that improve the effect of removing the solid particles from the tubular filter cartridge are obtained.

In the advantageous case where, during water and air delivery, the bar 12 is inserted in the through-duct 8 of a tubular filter cartridge 2, the free volume inside such through-duct 8 is reduced, and thus the amounts of water and air required to fill such free volume and allow such water and air to subsequently exit from the filtering side surface 5 of the tubular filter cartridge 2 are reduced.

In an advantageous embodiment, such as for example that illustrated in the attached figures, wherein the device 1 is provided with the washing means 28, these can be operated during the delivery of water and/or air in the through-duct 8, or before or after such delivery, also to wash the external face 5a of the filtering side wall 5 of a tubular filter cartridge 2 positioned on a first closing element 10.

In the advantageous embodiment in which the device 1 is provided with the rotation means suitable for rotating a tubular filter cartridge 2 around its longitudinal axis 16 arranged with its first base 3 positioned on the first closing element 10, such rotation means can be operated simultaneously with the washing means 28, so as to subject the entire external face 5a of the filtering side wall 5 to the action of the washing means 28 (e.g., the one or more nozzles 29); for example, the washing means 28 can be operated while the toothed wheels 10a rotate around their hinging axis, so as to subject the entire external face 5a of the filtering side wall 5 to the action of the washing means 28 (e.g., the one or more nozzles 29).

In an advantageous embodiment, such as for example that illustrated in the attached figures, after repeating the phases of introducing water and air in the through-duct 8 for a desired number of times, the second closing element 11 can be separated from the second base 4 of the tubular filter cartridge 2, advantageously by the selective positioning means 18, operated by the electronic control means 50.

In this advantageous embodiment, the movement means 13 can then be operated to move the first closing element 10 away from the second closing element 11 and to bring a further first closing element 10, on which the first base 3 of a further tubular filter cartridge 2 is positioned, in correspondence with the second closing element 11, so as to be able to position such second closing element 11 on the second base 4 of the further tubular filter cartridge 2, and then also repeat the phases of water and air delivery described above with reference to the first tubular filter cartridge 2 for the further tubular filter cartridge 2.

It has thus been demonstrated that the finding solves the task and objects stated above, as such tubular filter cartridges are cleaned very accurately and deeply, and with very quick execution times, due to the repeated introduction of water and air (alternately or overlapping each other) inside the through-duct of the tubular filter cartridges, until such water and air exit from the filtering side surface thereof.

Again, alternating the introduction of water and air allows to keep a reduced water consumption compared to a manual cleaning intervention carried out by a pressure washer or similar high-pressure washing device; furthermore, in the advantageous case where there is a bar inserted in the through-duct of the tubular filter cartridges during water and air delivery, the water and air consumption is further reduced, as the free volume inside such through-duct, and consequently the amounts of water and air needed to fill such free volume and allow such water and air to subsequently exit from the filtering side surface, is reduced.

Finally, it is clear that the device and method according to the finding, as described here, are susceptible to numerous modifications or variants, all falling within the finding; furthermore, all details can be replaced by technically equivalent elements without departing from the scope of the appended claims.

## Claims

1. Device (1) for cleaning tubular filter cartridges (2) comprising a first base (3) and a second base (4), connected to each other by a filtering side wall (5), on which a first opening (6) and a second opening (7) are respectively obtained, connected to each other by a through-duct (8), obtained longitudinally to the respective tubular filter cartridge (2),
**characterized by** comprising:
- at least a first closing element (10) on which said first base (3) of a tubular filter cartridge (2) can be positioned, so as to close said first opening (6) thereof;
- a second closing element (11) which can be positioned on said second base (4) of a tubular filter cartridge (2) when the same is positioned with said respective first base (3) on said first closing element (10), so as to close said second opening (7) thereof;
- means for selectively introducing water (22) connected to said second closing element (11) or to said first closing element (10) in such a way as to be able to introduce water, at a pressure higher than atmospheric pressure, through the one between said second closing element (11) and said first closing element (10) to which said means for selectively introducing water (22) are connected, respectively in said second opening (7) or in said first opening (6), and from this in said through-duct (8), of a tubular filter cartridge (2) whose first base (3) is positioned on said first closing element (10) and on whose second base (4) said second closing element (11) is positioned;
- means for selectively introducing air (25) connected to said second closing element (11) or to said first closing element (10) in such a way as to be able to introduce air, at a pressure higher than atmospheric pressure, through the one between said second closing element (11) and said first closing element (10) to which said means for selectively introducing air (25) are connected, respectively in said second opening (7) or in said first opening (6), and from this in said through duct (8), of a tubular filter cartridge (2) whose first base (3) is positioned on said first closing element (10) and on whose second base (4) said second closing element (11) is positioned;
- electronic control means (50) configured to control said means for selectively introducing water (22) and said means for selectively introducing air (25), so as to be able to selectively introduce, for a desired time, water and/or air at a pressure higher than the atmospheric pressure in said through-duct (8) of a tubular filter cartridge (2) whose first base (3) is positioned on said first closing element (10) and on whose second base (4) said second closing element (11) is positioned.

2. Device (1), as in claim 1, in which a bar (12) protrudes from said first closing element (10), suitable for being inserted into said first opening (6) of said first base (3) and into said through-duct (8) of a tubular filter cartridge (2) when this is positioned with said first base (3) on said first closing element (10).

3. Device (1), as in one or more of the previous claims, comprising two or more of said first closing elements (10) and movement means (13) of said two or more first closing elements (10) configured to selectively bring a desired one of said two or more first closing elements (10) in correspondence with said second closing element (11), so as to be able to position said second closing element (11) and said desired first closing element (10) respectively on said second base (4) and on said first base (3) of a same tubular filter cartridge (2).

4. Device (1) as in claim 3, wherein said movement means (13) comprise a rotating support (14) which can be rotated around a vertical axis of rotation (15) and on which said two or more first closing elements (10) are mounted in such a way that if said first bases (3) of as many tubular filter cartridges (2) are positioned on them, the latter are arranged with their longitudinal axis (16) parallel to said vertical axis of rotation (15).

5. Device, as per one or more of the previous claims, comprising rotation means suitable for rotating around its longitudinal axis (16) a tubular filter cartridge (2) arranged with said first base (3) positioned on said first closing element (10).

6. Device (1) as in claims 4 and 5, wherein said two or more first closing elements (10) comprise as many toothed wheels (10a), on a first flat face (10b) of which said first base (3) of a tubular filter cartridge (2) can be positioned, said toothed wheels (10a) being hinged to said rotating support (14) and being arranged along a circumference (17) defined on said rotating support (14) and centered in said vertical axis of rotation (15), wherein said rotation means comprise a ring (40), fixed with respect to said vertical rotation axis (15), internally toothed so as to mesh with said toothed wheels (10a) and cause their rotation around the respective hinging axis during the rotation of said rotating support (14) around said vertical rotation axis (15).

7. Device (1), as in one or more of the previous claims, comprising washing means (28) suitable for spraying water on an external face (5a) of said filtering side wall (5) of a tubular filter cartridge (2) when this is positioned with said first base (3) on said first closing element (10).

8. Device (1), as in claim 7, wherein said washing means (28) comprise one or more nozzles (29) capable of being moved longitudinally to a tubular filter cartridge (2) when the same is positioned with its first base (3) on said first closing element (10), so as to be able to spray water on said external face (5a) of said filtering side wall (5) of said tubular filter cartridge (2).

9. Method for cleaning tubular filter cartridges (2) each comprising a first base (3) and a second base (4), connected to each other by a filtering side wall (5), on which, respectively, a first opening (6) and a second opening (7) are obtained, connected to each other by a through-duct (8), obtained longitudinally to the respective tubular filter cartridge (2),
**characterized by** the fact that it comprises the following phases:
a) positioning a tubular filter cartridge (2) with said first base (3) on said first closing element (10) of a device (1) as per one or more of the previous claims, so as to close said first opening (6) of the same;
b) positioning said second closing element (11) of said device (1) on said second base (4) of said tubular filter cartridge (2), so as to close said second opening (7) thereof;
c) repeating the following steps one or more times:
d) operating for a desired time said means for selectively introducing water (22) of said device (1), to introduce water at a pressure higher than atmospheric pressure, through the one between said second closing element (11) and said first closing element (10) to which said means for selectively introducing water (22) are connected, respectively in said second opening (7) or in said first opening (6) of said tubular filter cartridge (2), until said water enters said through-duct (8) of said tubular filter cartridge (2) and exits from it through said filtering side wall (5) of said tubular filter cartridge (2);
e) interrupting the operation of said means for selectively introducing water (22);
f) during said phase of operating for a desired time said means for selectively introducing water (22) or after a desired time from said phase of interrupting the operation of means for selectively introducing water (22), operating for a desired time said means for selectively introducing air (25) of said device (1), to introduce air at a pressure higher than atmospheric pressure, through that between said second closing element (11) and said first closing element (10) to which said means for selectively introducing air (25) are connected, respectively in said second opening (7) or in said first opening (6) of said tubular filter cartridge (2), until said air enters said through duct (8) of said tubular filter cartridge (2) and comes out from it through said filter side wall (5) of said tubular filter cartridge (2);
g) interrupting the operation of said means for selectively introducing air (25).

10. Method, as in claim 9, carried out using a device (1) according to claim 7, which comprises the following phase:
h) activating said washing means (28) to spray water on an external face (5a) of said filtering side wall (5) of said tubular filter cartridge (2).

11. Method, as in claim 9 or 10, carried out using a device (1) according to claim 3 or a claim dependent on claim 3, which comprises, after said phase c), the following phases:
i) separating said second closing element (11) of said device (1) from said second base (4) of said tubular filter cartridge (2);
l) operating said movement means (13) of said device (1) to move said first closing element (10) away from said second closing element (11) and to bring a further first closing element (10) on which the first base (3) of a further tubular filter cartridge (2) is positioned, in correspondence with said second closing element (11);
m) positioning said second closing element (11) of said device (1) on said second base (4) of said further tubular filter cartridge (2), so as to close said second opening (7) thereof;
n) repeating the following steps one or more times:
o) operating for a desired time said means for selectively introducing water (22) of said device (1), to introduce water, through the one between said second closing element (11) and said first closing element (10) to which said means for selectively introducing water (22) are connected, respectively in said second opening (7) or in said first opening (6) of said further tubular filter cartridge (2), until said water enters said through-duct (8) of said further tubular filter cartridge (2) and exits from it through said filtering side wall (5) of said further tubular filter cartridge (2);
p) interrupting the operation of said means for selectively introducing water (22);
q) during said phase of operating for a desired time said means for selectively introducing water (22) or after a desired time from said phase of interrupting the operation of said means for selectively introducing water (22), operating for a desired time said means for selectively introducing air (25) of said device (1), to introduce air at a desired pressure, higher than atmospheric pressure, through that between said second closing element (11) and said first closing element (10) to which said means for selectively introducing air (25) are connected, respectively in said second opening (7) or in said first opening (6) of said further tubular filter cartridge (2), until said air enters said through-duct (8) of said further tubular filter cartridge (2) and comes out from it through said filtering side wall (5) of said further tubular filter cartridge (2);
r) interrupting the operation of said means for selectively introducing air (25).
